# EUROPEAN PATENT APPLICATION

(11) **EP 4 190 156 A1**
(43) Date of publication of application: **07.06.2023**
(21) Application number: 21849601.6
(22) Date of filing: 24.06.2021
(51) Int. Cl.: A21B 1/44, F27B 9/20

(54) **WOOD-FIRED OVEN**

(30) Priority: 27.07.2020 ES 202031651 U
(71) Applicant: Mayor Soto, Jean, 30720 Santiago dela Ribera Murcia (ES)
(72) Inventor: Mayor Soto, Jean, 30720 Santiago dela Ribera Murcia (ES)
(86) International application number: PCT/ES2021/000026
(87) International publication number: WO 2022/023589

(57) **Abstract**

The invention relates to a wood-fired oven, or the type comprising a baking cavity, a wood-burning hearth connected to the cavity, and an entry for introducing the foods to be baked.

## Description

### Subject matter of the Invention

The current invention relates to a wood-fired oven that enhances the management of baked goods.

### State of the art

The only wood-fired ovens that are now understood have a baking cavity, a hearth that burns wood connected to the baking cavity, and an access for placing the food to be baked.

The meal is placed in the baking cavity, which also receives the heat produced in the hearth as well as the flavors of the burning wood.

These ovens, which are frequently used, for instance, to bake bread, have the drawback that they are deep in comparison to the size of the food introduction access, making it challenging to introduce and extract them through the use of blades or extensions. This inconvenience is addressed by the configuration of the oven of the invention.

### Description of the invention

The wood-fired oven of the invention is of the kind that contains a baking cavity, a hearth for burning wood connected to said cavity, and an access for introducing the food to be baked. The invention also comprises the following additional features:
- a mobile base that is situated on the baking cavity's lower closing division.
- a structure that is movable longitudinally from the interior of the cavity toward the entrance and vice versa.
- some method for the structure to move longitudinally.
- a rotating substructure where the mobile base is installed and is rotatably mounted on the longitudinally movable structure
- means for rotating the substructure;
- the arrangement of the structure, substructure, and their corresponding means of displacement and rotation underneath the lower closing division of the baking cavity, which includes a few holes for the mobile substructure elements that the base is supported by to pass through.

In this manner, food handling is enhanced, particularly during introduction and extraction, as the base is moved closer to the access where food is introduced and removed. In addition, by rotating the structure, we can bring any portion of the base's contour closer to the access, making the base's center the portion that is furthest from the access in comparison to existing ovens. The base returns to its original place in the cavity during baking to ensure equal baking. In addition, being positioned beneath the lower closing partition of the baking cavity shields the structure, substructure, and their respective means of movement and rotation from high temperatures.

It also makes it possible to use the rotation of the base to further homogenize baking because there are some areas of the oven that are slightly hotter, such as the connection with the hearth. This benefits the operator's safety because they don't have to expose themselves as much when putting the food in or taking it out. such as the interaction with the hearth, are a little hotter. By rotating the base, we can keep the food from being exposed to various temperatures throughout the day.

### Description of drawings

Figure 1: Shows a sectional side view of the oven of the invention.
Figure 2: Shows a sectioned plan view of the furnace of the invention.
Figure 3: Shows a detail in plan of the structure and substructure of the furnace of the invention.

### Preferable embodiment of the invention

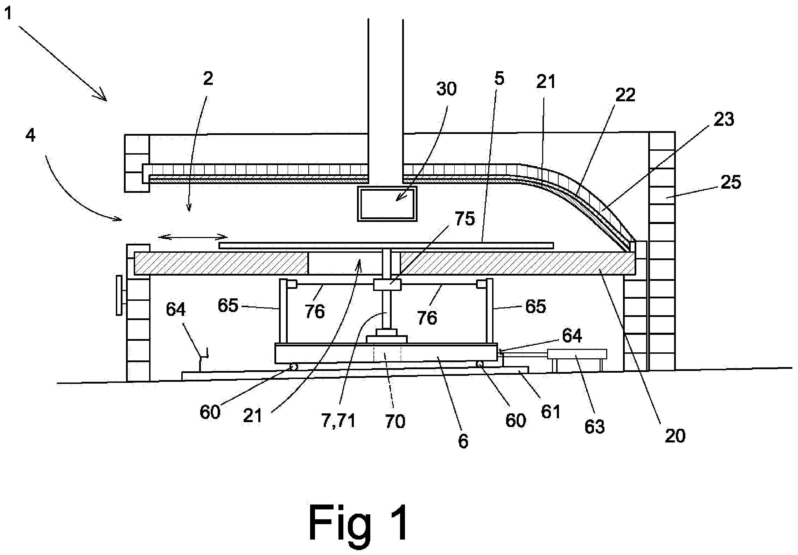

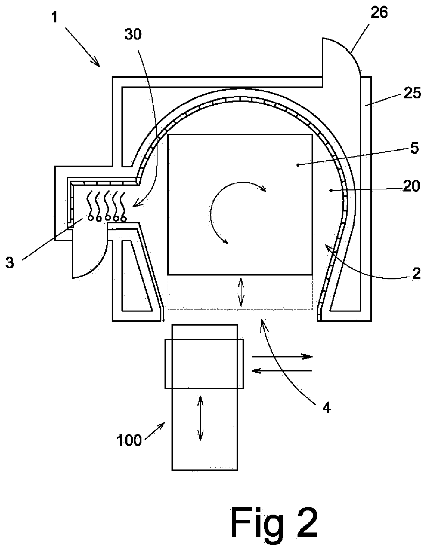

The wood-fired oven (1) of the invention (see figs. 1 and 2) is of the type having a baking cavity (2), a hearth (3) for wood combustion that is connected to said cavity (2) through a window (30), and an access (4) for introducing the food to be baked, and further comprises, in accordance with the invention:
- a movable base (5) that is situated on the baking cavity's lower closing division (20) (2),
- a structure (6) that can be longitudinally displaced from the interior of the cavity (2) to the access (4) and vice versa; and
- a method for the structure's longitudinal displacement (6),
- a rotating substructure (7), which is rotatably mounted on the longitudinally movable structure (6) and on which the movable base (5) is mounted, and
- a means for rotating the substructure (7);
- the structure (6), substructure (7) and their respective means of displacement and rotation are arranged under the lower closing division (20) of the baking cavity (2), which includes some holes (21) (see fig. 1) for the passage of the mobile elements of the substructure (7) on which the base (5) is supported.

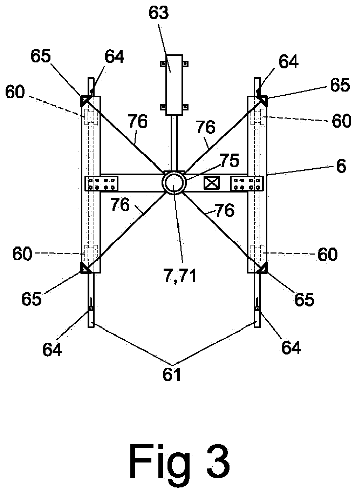

Preferably, the structure (6) comprises a carriage provided with lower rollers (60) (see figs. 1 and 3); comprising lower guides (61) in which said rollers (60) run. This allows for guided movement and prevents the movement from becoming unbalanced, as well as absorbing the expansion caused by temperature variations in the tolerances between the rollers and guides. Furthermore, in this specific example, the means of longitudinal displacement of the structure (6) comprise a hydraulic cylinder (63) minimizing mechanisms affected by heat; comprising limit switches (64) at the extreme positions of displacement of the structure (6).

In this example, the substructure (7) comprises a rotating shaft (71) supported by the structure (6) (directly or indirectly); the means of rotation of the substructure (7) comprises a motor (70) coupled to said shaft (71);

The mobile base (5) is supported on the upper part of said shaft (71). This results in a simple structure-substructure assembly, with a minimum number of parts.

As for the lower closing division (20) of the cavity (2), it comprises a recess (21) in the form of a longitudinal groove through which the rotating shaft (71) runs (see fig 1).

Additionally, the shaft in this form has access to an upper centring bearing (75) (71). By means of arms (65) that extend from the structure (6) (see also fig. 3) and tie rods (76), which connect the upper ends of the arms (65) to the bearing, this bearing (75) is fixed to the structure (6) (75). This enables the centring to be adjusted by acting on the tierods (76).

Finally, it should be mentioned that the cavity (2) is best constructed of insulating and refractory materials, including an outside layer (23) of refractory brick, an inner layer (21) of refractory concrete, and an intermediate layer (22) of thermal insulation.

The food can even be inserted and removed using an automatic loader (100) with forward and lateral displacement placed opposite the entrance (4) thanks to the suggested configuration's convenience of use and greater safety (see fig 2). The oven may contain an external casing (25) with access doors (26) for maintenance, it should be mentioned.

The invention has been sufficiently disclosed, and it is indicated that the description of the invention and its preferred embodiment is to be read broadly, covering all feasible variations of embodiments that may be inferred from the contents of this specification and the claims.

## Claims

1. Wood-fired oven, of the type comprising a baking cavity (2), a hearth (3) for burning wood that is connected to said cavity (2), and an access (4) for introducing the food to be baked; **characterized in that** it comprises:
- a mobile base (5), which is arranged on the lower closing division (20) of the baking cavity (2),
- a structure (6) longitudinally detachable from the cavity's interior towards the access (4) and vice versa,
- a method for the structure's longitudinal displacement (6),
- a mobile base (5) that is mounted on a rotating substructure (7) that is rotatably mounted on the longitudinally moveable structure (6);
- a method of rotating the substructure (7);
- the structure (6), substructure (7) and their respective means of displacement and rotation are arranged under the lower closing division (20) of the baking cavity (2), which includes holes (21) for the passage of the mobile elements of the substructure (7) on which the base (5) is supported.

2. Wood-fired oven, according to claim 1, wherein the structure (6) comprises a carriage provided with lower rollers (60); comprising lower guides (61) in which said rollers (60) run.

3. Wood-fired oven, according to any of the preceding claims, wherein the means 25 of longitudinal displacement of the structure (6) comprise a hydraulic cylinder (63); comprising limit switches (64) at the extreme positions of displacement of the structure (6).

4. Wood-fired oven, according to any of the previous claims, where the substructure (7) comprises a rotating shaft (71) supported on the structure (6); the means of rotation of the substructure (7) comprising a motor (70) coupled to said shaft (71); the mobile base (5) being supported on the upper part of said shaft (71).

5. Wood-fired oven, according to claim 4, wherein the lower closing division (20) of the cavity (2) comprises a recess (21) in the form of a longitudinal groove through which the rotating shaft (71) runs.

6. Wood-fired oven, according to any one of claims 4 or 5, wherein the shaft (71) 5 comprises an upper centring bearing (75).

7. Wood-fired oven, for firewood according to claim 6, where the bearing (75) is fixed to the structure (6) by means of arms (65) ascending from said structure (6) and braces (76) which are found joining the upper ends of said arms (65) with the bearing (75).

8. Wood-fired oven, according to any of the previous claims, where the cavity (2) is made of insulating and refractory material.

9. Wood-fired oven, according to claim 8, wherein the cavity (2) comprises an inner layer (21) of refractory concrete, an intermediate layer (22) of thermal insulation and an outer layer (23) of refractory brick.

10. Wood-fired oven, according to any of the previous claims, comprising an automatic loader (100) with forward and lateral displacement arranged in front of the access (4).
